Europäisches Patentamt

European Patent Office

Office européen des brevets

(11) Veröffentlichungsnummer: **0 284 825 B1**

(19)

(12) **EUROPÄISCHE PATENTSCHRIFT**

(45) Veröffentlichungstag der Patentschrift: **14.10.92**

(21) Anmeldenummer: **88103435.9**

(22) Anmeldetag: **05.03.88**

(51) Int. Cl.⁵: **B65D 85/57**, B32B 27/20

(54) **Verpackungshülle für scheibenförmige magnetische Informationsträger.**

(30) Priorität: **14.03.87 DE 8703847 U**

(43) Veröffentlichungstag der Anmeldung:
**05.10.88 Patentblatt 88/40**

(45) Bekanntmachung des Hinweises auf die
Patenterteilung:
**14.10.92 Patentblatt 92/42**

(84) Benannte Vertragsstaaten:
**BE DE ES FR GB IT NL**

(56) Entgegenhaltungen:
**EP-A- 0 155 595**
**EP-A- 0 217 253**
**US-A- 4 687 101**

(73) Patentinhaber: **HOECHST AKTIENGESELL-
SCHAFT**
**Postfach 80 03 20**
**W-6230 Frankfurt am Main 80(DE)**

(72) Erfinder: **Bothe, Lothar, Dr.**
**Kurt-Schumacher-Strasse 69E**
**W-6500 Mainz-Gonsenheim(DE)**
Erfinder: **Schlögl, Gunter, Dr.**
**Finkenweg 2**
**W-6233 Kelkheim(DE)**
Erfinder: **Crass, Günther**
**Bachstrasse 7**
**W-6204 Taunusstein 4(DE)**

## Beschreibung

Die Erfindung betrifft eine Verpackungshülle aus thermoplastischem Kunststoff für scheibenförmige magnetische Informationsträger.

Die einfachsten Verpackungshüllen für scheibenförmige magnetische Informationsträger, sogenannte Disketten oder Floppy Disks, bestimmt zum Einsatz für beispielsweise Personalcomputer, bestehen aus Papier. Papierverpackungshüllen besitzen jedoch nachteiligerweise eine nur sehr unbefriedigende Einreißfestigkeit und verschleißen daher besonders bei häufigem Gebrauch sehr rasch.

Es ist daher in der Folgezeit versucht worden, durch den Einsatz von synthetischem Papier auf Basis von Faservliesen aus Polyethylen den Mangel der unbefriedigenden Einreißfestigkeit zu beheben. Diese verbesserten Verpackungshüllen weisen jedoch strukturbedingt ein faseriges, wenig ansprechendes und wenig werbewirksames Aussehen auf, darüber hinaus sind ihre antistatischen Eigenschaften noch unbefriedigend.

Es wurden auch bereits Verpackungshüllen aus Polyethylenfolie hergestellt. Solche Hüllen lassen sich jedoch zu leicht verdehnen und besitzen immer noch nachteilige antistatische Eigenschaften.

Es stellt sich daher die Aufgabe, eine Verpackungshülle für magnetische Informationsträger zu schaffen, die neben einer sehr hohen Einreißfestigkeit und neben einem sehr ansprechenden optischen Erscheinungsbild auch noch hervorragende mechanische Eigenschaften (Dehnungsstabilität) und gute antistatische Eigenschaften aufweist.

Gelöst wird diese Aufgabe durch eine Verpackungshülle der eingangs genannten Gattung, deren Kennzeichenmerkmale darin zu sehen sind, daß eine flache Hülle mit einer einseitig sich über die gesamte Kante der Hülle erstreckenden Hüllenöffnung eine vordere Hüllenwandung und eine hintere Hüllenwandung umfaßt, wobei die vordere Hüllenwandung in dem der Hüllenöffnung gegenüberliegenden Hüllenbodenbereich durch Umfalzung des die Verpackungshülle bildenden Zuschnitts integral in die hintere Hüllenwandung übergeht und wobei durch Umfalzung von seitlich von einer der Hüllenwandungen abstehenden Überstandslaschen im seitenrandnahen Bereich der Hülle Überlappungszonen vorliegen, in denen durch Verschweißung die vordere Hüllenwandung mit der hinteren Hüllenwandung festhaftend verbunden ist, und daß der die Verpackungshülle bildende Zuschnitt aus einer biaxial orientierten, opaken Mehrschichtfolie gebildet ist, umfassend eine Basisschicht, die im wesentlichen Polypropylen und Füllstoffe in einer Menge im Bereich von 10 bis 30 Gew.-%, bezogen auf das Gesamtgewicht des Polypropylens und der Füllstoffe, enthält, und beidseitig auf der Basisschicht angeordnete Oberflächenschichten.

Die den Zuschnitt bildende Folie weist insbesondere eine Dichte im Bereich von 0,4 bis 0,9 $g/cm^3$ auf, und der eingesetzte Füllstoff besitzt eine mittlere Teilchengröße von 2 bis 5 $\mu m$.

Die erfindungsgemäße Verpackungshülle besitzt eine Kantenlänge im Bereich von 7 bis 22 cm, bevorzugt von 13 bis 22 cm, wobei die Kantenlänge an der Hüllenöffnung bzw. dem parallel hierzu angeordneten Hüllenbodenbereich gemessen wird. Die seitlichen Kanten der Verpackungshülle sind bevorzugt kürzer ausgebildet als die Kanten des Hüllenbodenbereichs bzw. der Hüllenöffnung, und der scheibenförmige Informationsträger, welcher seinerseits in einem fest verschlossenen quadratischen Schutzumschlag angeordnet ist, ragt mit diesem Schutzumschlag teilweise aus der Hüllenöffnung der erfindungsgemäßen Verpackungshülle hervor. Die Überlappungszonen, die bevorzugt in den beiden seitenrandnahen Bereichen der hinteren Hüllenwandung angeordnet sind, haben üblicherweise eine Breite bis zu wenigen Zentimetern, bevorzugt von 0,5 bis 3 cm. In den Überlappungszonen sind die umgefalzten, von der vorderen Hüllenwandung abstehenden Überstandslaschen mit der hinteren Hüllenwandung durch Versiegelung, Verklebung oder Verschweißung verbunden. Die hintere Hüllenwandung ist in einer bevorzugten Ausgestaltung der Erfindung so ausgebildet, daß sie über die Hüllenöffnung hinausragt. Durch diesen Überstand der hinteren Hüllenwandung über die Hüllenöffnung wird das Einbringen des mit dem Schutzumschlag versehenen magnetischen Informationsträgers in die Verpackungshülle erleichtert. Der Überstand besitzt eine Länge von wenigen Zentimetern, bevorzugt von 1 bis 5 cm, und kann gegebenenfalls so ausgebildet sein, daß er sich nach oben verjüngt.

Der die erfindungsgemäße Verpackungshülle bildende Zuschnitt besteht bevorzugt aus einer durch Coextrusion hergestellten, ein- oder beidseitig beschichteten und nacheinander in Längsrichtung bei einer Temperatur von 120 bis 130°C und in Querrichtung bei einer Temperatur von 160 bis 170°C gestreckten opaken Folie mit einem niedrigen Dichtewert. Die Folie enthaltend die angegebenen Füllstoffmengen wird relativ stark gestreckt, und zwar nacheinander um das 5- bis 7fache in Längsrichtung und um das 8- bis 10fache in Querrichtung. Bevorzugt zeichnet sich die Folie dadurch aus, daß die Menge an Füllstoff, bezogen auf das Gesamtgewicht von Polypropylen und Füllstoff, 16 bis 27 Gew.-% beträgt und der eingesetzte Füllstoff eine mittlere Teilchengröße von 3 bis 4 $\mu m$ hat.

Die Folie besitzt insbesondere eine Dichte von 0,4 bis 0,7, vorzugsweise 0,4 bis 0,6 $g/cm^3$. Ihre Dicke beträgt etwa 10 bis 120 $\mu m$, vorzugsweise 20 bis 80 $\mu m$, die Dicke der Beschichtung hat an der Gesamtdicke der Folie nur einen geringen Anteil und beträgt zweckmäßigerweise 0,1 bis 10 $\mu$m. In bevorzugter Ausführungsform besteht die äußere Beschichtung aus siegelbarem Material.

Das Polypropylen der Basisschicht kann ein isotaktisches Homopolymerisat oder Copolymerisat des Propylens mit Ethylen oder Alpha-Olefinen mit 4 bis 8 C-Atomen oder eine Mischung aus Propylen-Homo- und Propylen-Copolymerisaten sein. In den Copolymerisaten beträgt die Comonomermenge im allgemeinen maximal 10 Gew.-%, bezogen auf das Copolymerisat. Bevorzugte Comonomere sind Ethylen und Buten-(1). Das Polymere der Basisschicht hat zweckmäßigerweise einen Schmelzflußindex im Bereich von 0,5 g/10 min bis 8 g/10 min bei 230°C und 2,16kp Belastung (DIN 53735), insbesondere von 1,5 g/10 min bis 4 g/10 min.

Bei den Füllstoffen handelt es sich um die üblichen anorganischen oder organischen, mit Polypropylen unverträglichen, pulverförmigen Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Die Füllstoffmenge beträgt bevorzugt 16 bis 30 Gew.-%, insbesondere 16 bis 27 Gew.-%, bezogen auf das Gewicht des vorhandenen Polypropylens. Die mittlere Teilchengröße des pulverförmigen Füllstoffes liegt vorzugsweise im Bereich von 3 bis 4 $\mu$m. Die Basisschicht kann gegebenenfalls zweckmäßige Additive wie Antioxidantien, Antistatika und/oder Stabilisatoren in einer jeweils wirksamen Menge enthalten.

Bei den Oberflächenschichten handelt es sich in der Regel um heiß- oder kaltsiegelfähige Schichten. Es kann sich auch um nichtsiegelbare Schichten handeln. Alle diese Schichten liegen beidseitig vor. Die Heißsiegelschicht besteht vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.-% (bezogen auf das Copolymerisat), einem Terpolymerisat aus Propylen, Ethylen und einem Alpha-Olefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines Alpha-Olefins mit 4 bis 10 Kohlenstoffatomen, oder aus einer Mischung dieser Polymeren. Die Comonomeren sind in den Polymerisaten im wesentlichen statistisch verteilt (vgl. DE-B-28 14 311). Geeignete Kaltsiegelschichten bestehen aus Polymerisaten auf der Basis von natürlichem oder synthetischem Kautschuk. Die nichtsiegelbaren Oberflächenschichten bestehen vorzugsweise aus einem entsprechenden Propylenhomopolymerisat. Die Dicke der Oberflächenschichten beträgt jeweils etwa 0,1 bis 10 $\mu$m, vorzugsweise 0,5 bis 2 $\mu$m.

Die Folie kann neben den für die Erzeugung des opaken Aussehens notwendigen Füllstoffen zusätzlich auch noch Farbpigmente in Mengen von 0,01 bis 2 Gew.-% enthalten. Dadurch wird der erfindungsgemäßen Verpackungshülle ein besonders werbewirksames metallisches Aussehen verliehen. Besonders bevorzugt werden zusätzlich 0,04 bis 1 Gew.-% Rußteilchen in die Basisschicht mitinkorporiert. Infolge der elektrischen Leitfähigkeit der Rußteilchen werden die antistatischen Eigenschaften der erfindungsgemäßen Verpackungshülle verbessert.

Die erfindungsgemäße Verpackungshülle trägt in einer besonderen Ausgestaltungsform zusätzlich auf ihrer Innenseite, d.h. jeweils auf den Innenseiten sowohl der vorderen Hüllenwandung wie der hinteren Hüllenwandung, eine Metallisierung. Die Metallisierung wird bevorzugt bereits durch Vakuumaufdampfung auf die die Verpackungshülle bildende Folie aufgebracht und besteht insbesondere aus Aluminium. Durch die im Inneren der Verpackungshülle angeordnete Metallisierung kann sich die erfindungsgemäße Verpackungshülle beim Einlegen des magnetischen Informationsträgers nicht mehr elektrostatisch aufladen, daher bietet sie einen noch besseren Schutz für in magnetischer Form auf dem Informationsträger gespeicherte Daten.

In einer weiteren bevorzugten Ausführungsform ist die erfindungsgemäße Verpackungshülle auf ihrer Außenseite, d.h. jeweils auf den Außenseiten der vorderen Hüllenwandung wie der hinteren Hüllenwandung, mit einer Bedruckung versehen. Zur Verbesserung der Bedruckbarkeit kann die die Verpackungshülle bildende Folie gegebenenfalls bei ihrer Herstellung noch einer Coronaentladungsbehandlung unterzogen werden.

In einer ganz besonders bevorzugten Ausführungsform ist die Verpackungshülle auf ihrer Innenseite mit einer Metallisierung versehen, trägt auf ihrer Außenseite eine Bedruckung und ist darüber hinaus auch noch zum Schutz der Bedruckung auf ihrer Außenseite über der Bedruckung mit einer transparenten Schutzfolie überzogen. Die Schutzfolie kann wahlweise aus Polyethylen oder Polypropylen bestehen.

Die Erfindung soll nachfolgend anhand der Abbildungen beispielhaft näher erläutert werden.

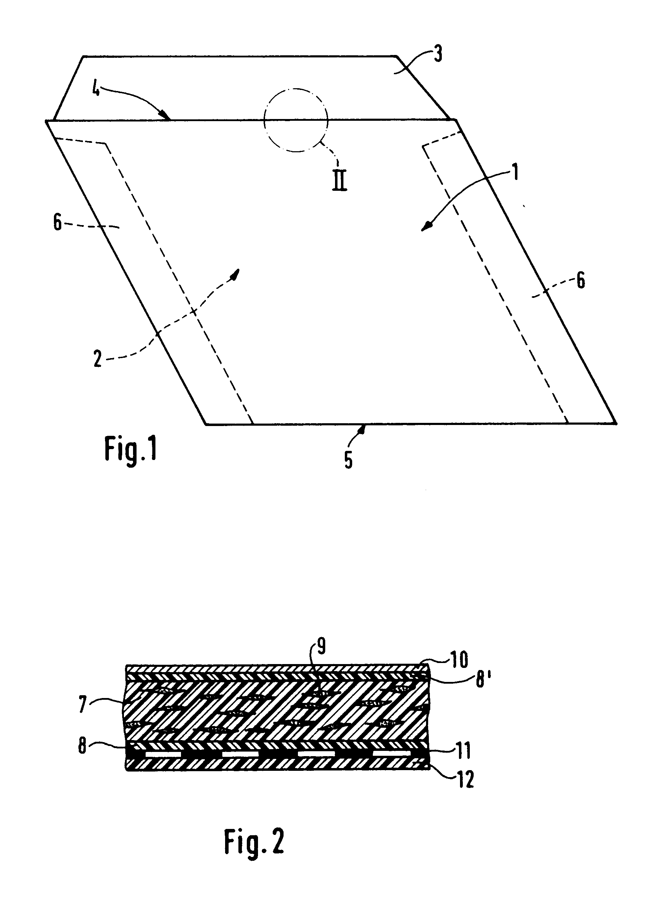

Die Figur 1 zeigt eine erfindungsgemäße Verpackungshülle in perspektivischer Ansicht von schräg oben. Deutlich erkennbar ist der Überstand 3 der hinteren Hüllenwandung 2, der im Bereich der Hüllenöffnung 4 über die vordere Hüllenwandung 1 hinausragt. Der Hüllenöffnung 4 diametral entgegengesetzt befindet sich der Hüllenbodenbereich 5, in dem die vordere Hüllenwandung 1 durch Umfalzen integral in die hintere Hüllenwandung 2 übergeht und so den unteren Abschluß der Verpackungshülle bildet. In den seitenrandnahen Bereichen der hinteren Hüllenwandung 2 ist durch unterbrochene Linien die Lage der Überlappungszonen 6 dargestellt, an denen die vordere Hüllenwandung 1 mit der hinteren Hüllenwandung 2 verbunden ist.

In stark vergrößerter Darstellungsweise ist in Figur 2 die Schichtenfolge der die Verpackungshülle bildenden Folie dargestellt. Die Basisschicht 7 ist beidseitig von den transparenten Oberflächenschichten 8,8' überzogen und besitzt durch Füllstoffe hervorgerufene Mikrohohlräume 9, durch die der erfindungsgemäßen Verpackungshülle ein opakes Aussehen verliehen wird. Die der Innenseite der Verpackungshülle zugekehrte Oberflächenschicht 8' trägt eine Metallisierung 10, und die der Außenseite der Verpackungshülle zugewandte Oberflächenschicht 8 trägt eine Bedruckung 11, die mit einer Schutzfolie 12 überzogen ist.

**Patentansprüche**

1. Verpackungshülle aus thermoplastischem Kunststoff für scheibenförmige magnetische Informationsträger, dadurch gekennzeichnet, daß eine flache Hülle mit einer einseitig sich über die gesamte Kante der Hülle erstreckenden Hüllenöffnung eine vordere Hüllenwandung und eine hintere Hüllenwandung umfaßt, wobei die vordere Hüllenwandung in dem der Hüllenöffnung gegenüberliegenden Hüllenbodenbereich durch Umfalzung des die Verpackungshülle bildenden Zuschnitts integral in die hintere Hüllenwandung übergeht und wobei durch Umfalzung von seitlich von einer der Hüllenwandungen abstehenden Überstandslaschen im seitenrandnahen Bereich der Hülle Überlappungszonen vorliegen, in denen durch Verschweißung die vordere Hüllenwandung mit der hinteren Hüllenwandung festhaftend verbunden ist, und daß der die Verpackungshülle bildende Zuschnitt aus einer biaxial orientierten, opaken Mehrschichtfolie gebildet ist, umfassend eine Basisschicht, die im wesentlichen Polypropylen und Füllstoffe in einer Menge im Bereich von 5 bis 30 Gew.-%, bezogen auf das Gesamtgewicht des Polypropylens und der Füllstoffe, enthält, und beidseitig auf der Basisschicht angeordnete Oberflächenschichten.

2. Verpackungshülle nach Anspruch 1, dadurch gekennzeichnet, daß sie eine Kantenlänge im Bereich von 7 bis 22 cm aufweist, bevorzugt von 13 bis 22 cm.

3. Verpackungshülle nach Anspruch 1 oder 2, dadurch gekennzeichnet, daß die Überlappungszonen in den seitenrandnahen Bereichen der hinteren Hüllenwandung angeordnet sind und eine Breite von wenigen Zentimetern, bevorzugt von 0,5 bis 3 cm, aufweisen.

4. Verpackungshülle nach einem der Ansprüche 1 bis 3, dadurch gekennzeichnet, daß die hintere Hüllenwandung mit einem Überstand über die Hüllenöffnung hinausragt.

5. Verpackungshülle nach Anspruch 4, dadurch gekennzeichnet, daß der Hüllenhinterwandungsüberstand eine Länge im Bereich von 1 bis 5 cm aufweist und sich von der Hüllenöffnung wegweisend verjüngt.

6. Verpackungshülle nach einem der Ansprüche 1 bis 5, dadurch gekennzeichnet, daß die Basisschicht der die Verpackungshülle bildenden Folie eine Dichte im Bereich von 0,4 bis 0,75 g/cm$^3$ aufweist.

7. Verpackungshülle nach einem der Ansprüche 1 bis 6, dadurch gekennzeichnet, daß der der Basisschicht zugesetzte Füllstoff eine mittlere Teilchengröße im Bereich von 2 bis 5 $\mu$m besitzt.

8. Verpackungshülle nach einem der Ansprüche 1 bis 8, dadurch gekennzeichnet, daß die Füllstoffmenge in der Basisschicht im Bereich von 10 bis 20 Gew.-% liegt.

9. Verpackungshülle nach Anspruch 8, dadurch gekennzeichnet, daß die Füllstoffe anorganische oder organische inerte Füllstoffe sind.

10. Verpackungshülle nach einem der Ansprüche 1 bis 9, dadurch gekennzeichnet, daß die Basisschicht zusätzlich noch Farbpigmente in Mengen von 0,01 bis 2 Gew.-% enthält.

11. Verpackungshülle nach Anspruch 10, dadurch gekennzeichnet, daß die Basisschicht 0,04 bis 1 Gew.-% Rußteilchen enthält.

12. Verpackungshülle nach einem der Ansprüche 1 bis 11, dadurch gekennzeichnet, daß die Gesamtdicke der die Verpackungshülle bildenden Mehrschichtfolie im Bereich von 10 bis 120 $\mu$m, bevorzugt von 20 bis 80 $\mu$m, liegt.

13. Verpackungshülle nach einem der Ansprüche 1 bis 12, dadurch gekennzeichnet, daß die Oberflächenschichten der die Verpackungshülle bildenden Mehrschichtfolie siegelbare Schichten sind.

14. Verpackungshülle nach einem der Ansprüche 1 bis 13, dadurch gekennzeichnet, daß die Dicke der Oberflächenschichten im Bereich von 0,1 bis 10 $\mu$m, bevorzugt von 0,5 bis 2 $\mu$m, liegt.

15. Verpackungshülle nach einem der Ansprüche 1 bis 14, dadurch gekennzeichnet, daß sie zusätzlich eine Metallisierung trägt.

16. Verpackungshülle nach Anspruch 15, dadurch gekennzeichnet, daß die Metallisierung durch Vakuumbedampfung aufgebrachtes Aluminium enthält.

17. Verpackungshülle nach Anspruch 15 oder 16, dadurch gekennzeichnet, daß die Metallisierung auf der Innenseite der Verpackungshülle angeordnet ist.

18. Verpackungshülle nach einem der Ansprüche 15 bis 17, dadurch gekennzeichnet, daß die Innenseiten sowohl der vorderen Hüllenwandung als auch der hinteren Hüllenwandung als auch des Hüllenhinterwandungsüberstands eine Metallisierung tragen.

19. Verpackungshülle nach einem der Ansprüche 1 bis 18, dadurch gekennzeichnet, daß die Verpackungshülle auf ihrer Außenseite eine Bedruckung trägt.

20. Verpackungshülle nach Anspruch 19, dadurch gekennzeichnet, daß die Außenseiten der vorderen Hüllenwandung und die Außenseiten der hinteren Hüllenwandung sowie des Hüllenhinterwandungsüberstandes eine Bedruckung tragen.

21. Verpackungshülle nach Anspruch 19 oder 20, dadurch gekennzeichnet, daß die Bedruckung mit einer Schutzfolie aus Polyethylen oder Polypropylen überzogen ist.

## Claims

1. A packaging wrapper of thermoplastic for disk-shaped magnetic information carriers, wherein a flat wrapper with a wrapper opening extending on one side along the entire edge of the wrapper comprises a front wrapper wall and a rear wrapper wall, the front wrapper wall merging integrally into the rear wrapper wall in the wrapper bottom region opposite the wrapper opening as a result of folding-over of the blank forming the packaging wrapper, and overlap zones being present in the region, close to the side edges, of the wrapper as a result of folding-over of projecting tabs jutting out laterally from one of the wrapper walls, in which zones the front wrapper wall is bonded with firm adhesion to the rear wrapper wall by means of welding, and wherein the blank forming the packaging wrapper is formed from a biaxially oriented, opaque multi-ply film comprising a base layer, essentially containing polypropylene and fillers in a quantity in the range from 5 to 30 % by weight, relative to the total weight of the polypropylene and the fillers, and surface layers arranged on both sides of the base layer.

2. The packaging wrapper as claimed in claim 1, which has an edge length in the range from 7 to 22 cm, preferably from 13 to 22 cm.

3. The packaging wrapper as claimed in claim 1 or 2, wherein the overlap zones are disposed in the regions, close to the side edges, of the rear wrapper wall and have a width of a few centimeters, preferably from 0.5 to 3 cm.

4. The packaging wrapper as claimed in any of claims 1 to 3, wherein a projection of the rear wrapper wall protrudes beyond the wrapper opening.

5. The packaging wrapper as claimed in claim 4, wherein the projection of the rear wrapper wall has a length in the region from 1 to 5 cm and tapers pointing away from the wrapper opening.

6. The packaging wrapper as claimed in any of claims 1 to 5, wherein the base layer of the film forming the packaging wrapper has a density in the range from 0.4 to 0.75 g/cm$^3$.

7. The packaging wrapper as claimed in any of claims 1 to 6, wherein the filler added to the base layer has a mean particle size in the range from 2 to 5 $\mu$m.

8. The packaging wrapper as claimed in any of claims 1 to 7, wherein the quantity of filler in the base layer is in the range from 10 to 20 % by weight.

9. The packaging wrapper as claimed in claim 8, wherein the fillers are inorganic or organic inert fillers.

10. The packaging wrapper as claimed in any of claims 1 to 9, wherein the base layer additionally also contains color pigments in quantities from 0.01 to 2 % by weight.

11. The packaging wrapper as claimed in claim 10, wherein the base layer contains 0.04 to 1 % by weight of carbon black particles.

12. The packaging wrapper as claimed in any of claims 1 to 11, wherein the total thickness of the multi-ply film forming the packaging wrapper is in the range from 10 to 120 $\mu$m, preferably from 20 to 80 $\mu$m.

13. The packaging wrapper as claimed in any of claims 1 to 12, wherein the surface layers of the multi-ply film forming the packaging wrapper are sealable layers.

14. The packaging wrapper as claimed in any of claims 1 to 13, wherein the thickness of the surface layers is in the range from 0.1 to 10 $\mu$m, preferably from 0.5 to 2 $\mu$m.

15. The packaging wrapper as claimed in any of claims 1 to 14, which additionally carries a metallization.

16. The packaging wrapper as claimed in claim 15, wherein the metallization contains aluminum applied by vacuum vapor-deposition.

17. The packaging wrapper as claimed in claim 15 or 16, wherein the metallization is provided on the inside of the packaging wrapper.

18. The packaging wrapper as claimed in any of claims 15 to 17, wherein the insides of both the front wrapper wall and of the rear wrapper wall as well as the projection of the rear wrapper wall carry a metallization.

19. The packaging wrapper as claimed in any of claims 1 to 18, wherein the packaging wrapper carries an imprint on its outside.

20. The packaging wrapper as claimed in claim 19, wherein the outsides of the front wrapper wall and the outsides of the rear wrapper wall and also of the projection of the rear wrapper wall carry an imprint.

21. The packaging wrapper as claimed in claim 19 or 20, wherein the imprint is coated by a protective film of polyethylene or polypropylene.

## Revendications

1. Enveloppe d'emballage en matière thermoplastique pour supports magnétiques d'information sous forme de disques, caractérisée en ce qu'une enveloppe plate, pourvue d'une ouverture s'étendant d'un côté sur tout le bord de l'enveloppe, comprend une paroi antérieure d'enveloppe et une paroi postérieure d'enveloppe, la paroi antérieure d'enveloppe fusionnant intégralement avec la paroi arrière de l'enveloppe dans la région du bas de l'enveloppe, opposée à son ouverture, par suite de la pliure du flan formant l'enveloppe d'emballage, et des zones de chevauchement étant présentes dans la région, proche des bords latéraux, de l'enveloppe, par suite du pliage de languettes faisant saillie latéralement à partir de l'une des parois d'enveloppe, zones dans lesquelles la paroi antérieure d'envelope est fermement liée à la paroi postérieure d'enveloppe par soudage, et que le flan formant l'enveloppe d'emballage se compose d'une feuille multicouche opaque, orientée biaxialement, comprenant une couche de base, qui est constituée essentiellement de polypropylène et de charges, à raison de 5 a 30 % en poids par rapport au poids total du polypropylène et des charges, et de couches de surface disposées de part et d'autre de la couche de base.

2. Enveloppe d'emballage selon la revendication 1, caractérisée en ce qu'elle présente une longueur de bords de 7 à 22 cm, de préférence de 13 à 22 cm.

3. Enveloppe d'emballage selon la revendication 1 ou 2, caractérisée en ce que les zones de chevauchement sont disposées aux endroits proches des bords latéraux de la paroi postérieure de l'enveloppe et présentent une largeur de quelques centimètres, de préférence de 0,5 à 3 cm.

4. Enveloppe d'emballage selon une des revendications 1 à 3, caractérisée en ce qu'une partie saillante de la paroi postérieure de l'enveloppe dépasse l'ouverture de l'enveloppe.

5. Enveloppe d'emballage selon la revendication 4, caractérisée en ce que la partie saillante de la paroi postérieure de l'enveloppe présente une longueur de 1 à 5 cm et se rétrécit en pointe en s'éloignant de l'ouverture de l'enveloppe.

**6.** Enveloppe d'emballage selon une des revendications 1 à 5, caractérisée en ce que la couche de base de la feuille formant l'enveloppe d'emballage présente une densité de 0,4 à o,75 g/cm$^3$.

**7.** Enveloppe d'emballage selon une des revendications 1 à 6, caractérisée en ce que la taille moyenne des particules de la charge, ajoutée à la couche de base, vaut de 2 à 5 $\mu$m.

**8.** Enveloppe d'emballage selon une des revendications 1 à 7, caractérisée en ce que la proportion de charge dans la couche de base vaut de 10 à 20 % en poids.

**9.** Enveloppe d'emballage selon la revendication 8, caractérisée en ce que les charges sont des charges inertes minérales ou organiques.

**10.** Enveloppe d'emballage selon une des revendications 1 à 9, caractérisée en ce que la couche de base contient en outre des pigments colorés à raison de 0,01 à 2 % en poids.

**11.** Enveloppe d'emballage selon la revendication 10, caractérisée en ce que la couche de base contient de 0,04 à 1 % en poids de particules de noir de carbone.

**12.** Enveloppe d'emballage selon une des revendications 1 à 11, caractérisée en ce que l'épaisseur totale de la feuille multicouche formant l'enveloppe vaut de 10 à 120 $\mu$m, de préférence de 20 à 80 $\mu$m.

**13.** Enveloppe d'emballage selon une des revendications 1 à 12, caractérisée en ce que les couches de surface de la feuille multicouche formant l'enveloppe sont des couches scellables.

**14.** Enveloppe d'emballage selon une des revendications 1 à 13, caractérisée en ce que l'épaisseur des couches de surface vaut de 0,1 à 10 $\mu$m, de préférence de 0,5 à 2 $\mu$m.

**15.** Enveloppe d'emballage selon une des revendications 1 à 14, caractérisée en ce qu'elle comporte en outre une métallisation.

**16.** Enveloppe d'emballage selon la revendication 15, caractérisée en ce que la métallisation consiste en un dépôt d'aluminium par vaporisation sous vide.

**17.** Enveloppe d'emballage selon la revendication 15 ou 16, caractérisée en ce que la métallisation est appliquée à l'intérieur de l'enveloppe d'emballage.

**18.** Enveloppe d'emballage selon une des revendications 15 à 17, caractérisée en ce que les faces internes de la paroi antérieure de l'enveloppe, de la paroi postérieure de l'enveloppe et de la partie saillante de la paroi postérieure de l'enveloppe comportent une métallisation.

**19.** Enveloppe d'emballage selon une des revendications 1 à 18, caractérisée en ce que l'enveloppe d'emballage comporte une impression sur sa face externe.

**20.** Enveloppe d'emballage selon la revendication 19, caractérisée en ce que les faces externes de la paroi antérieure de l'enveloppe, de la paroi postérieure de l'enveloppe et de la partie saillante de la paroi postérieure de l'enveloppe comportent une impression.

**21.** Enveloppe d'emballage selon la revendication 19 ou 20, caractérisée en ce que l'impression est recouverte d'une feuille protectrice en polyéthylène ou en polypropylène.

Fig.1

Fig.2